# FASCICULE DE BREVET EUROPEEN

(11) **EP 2 129 898 B1**
(45) Date de publication et mention de la délivrance du brevet: **14.08.2019**
(21) Numéro de dépôt: 08788041.5
(22) Date de dépôt: 25.03.2008
(51) Int. Cl.: F02F 1/42

(54) **CONDUIT D'ADMISSION POUR CULASSE DE MOTEUR THERMIQUE ET PROCEDE DE FABRICATION**
ZYLINDERKOPF-EINLASSLEITUNG FÜR EINEN VERBRENNUNGSMOTOR UND HERSTELLUNGSVERFAHREN DAFÜR
COMBUSTION ENGINE CYLINDER HEAD INTAKE DUCT AND METHOD OF MANUFACTURE

(30) Priorité: 02.04.2007 FR 0754205
(43) Date de publication de la demande: 09.12.2009
(73) Titulaire: Renault SAS, 92100 Boulogne Billancourt (FR)
(72) Inventeur: MAMY, Laurence, F-92500 Rueil Malmaison (FR); PERROQUIN, Thierry, F-77700 Bailly-romainvilliers (FR)
(86) Numéro de dépôt international: PCT/FR2008/050515
(87) Numéro de publication internationale: WO 2008/132405

(56) Documents cités:
- EP-A- 1 344 926
- US-A1- 2004 221 830

## Description

La présente invention se rapporte au domaine technique des moteurs thermiques, et plus particulièrement au dessin des conduits d'admission de la culasse, ainsi qu'à l'usinage de calibrage associé.

Elle a pour objets, un conduit d'admission, une culasse présentant au moins un tel conduit d'admission, son procédé de fabrication, et un moteur équipé d'une telle culasse.

Cette invention trouve une application privilégiée, mais non exclusive, sur les moteurs à allumage commandé.

Dans les moteurs à allumage commandé, on cherche à générer à l'intérieur des chambres de combustion, une aérodynamique structurée de type « tumble » (mouvement de rotation d'axe perpendiculaire au plan inter-soupapes d'admission).

Il est souhaitable de pouvoir bénéficier le plus possible de cette turbulence, en particulier au moment de l'allumage, car elle assure des vitesses de combustion plus importantes, notamment en charge partielle. La turbulence accroît alors le potentiel de dilution avec des gaz brûlés résiduels dans la chambre, ce qui se traduit directement par un gain sur la consommation. Par ailleurs, le « tumble » permet de travailler en forte sous-avance au démarrage à froid, et de récupérer ainsi de la thermique à l'échappement, pour l'amorçage du catalyseur. Enfin, pour les pleines charges à bas régime, « le tumble » accélère également la combustion, ce qui permet de travailler en sous-avance, tout en repoussant le cliquetis.

De manière générale, on vise à obtenir un mouvement aérodynamique de « tumble » d'une certaine intensité, tout en conservant une perméabilité suffisante pour assurer le niveau de performance moteur. La forme du conduit doit également garantir les prestations de consommation et de dépollution, lors de la mise en action du moteur. Enfin, elle doit aussi être simple réaliser, et robuste en fabrication.

En effet, les quatre prestations principales à optimiser sur un moteur (dépollution, mise en application, consommation et cliquetis) sont étroitement associées au « tumble », et nécessitent une grande robustesse de fabrication du moteur. Les conformations géométriques de conduit d'admission recherchant un aérodynamisme de type « tumble », doivent donc être particulièrement robustes, vis-à-vis des dispersions de fonderie. De tels conduits ne doivent en aucun cas introduire des disparités d'intensité aérodynamique, ou de perméabilité, qui dégraderaient les prestations de dépollution, de consommation, et de performance.

Afin de ne pas générer une marche, ou un tremplin, trop important qui ferait chuter la perméabilité, on réalise classiquement un bas de conduit brut rond, pour bien le raccorder avec l'ogive d'usinage, qui est nécessairement ronde. Or des conduits carrés favorisent le « tumble ». La forme du conduit doit donc intégrer une zone de transition, entre une section carrée, et une section ronde.

La publication, JP2003214169, décrit un conduit d'admission de type « tumble » qui présente en coupe, un creux dans la partie brute du conduit. Ce creux forme un tremplin, qui guide le flux d'air vers l'avant de la soupape. Un tel tremplin est certes favorable au mouvement tourbillonnaire de l'air d'admission, mais il crée une déviation trop brutale du flux d'air, pour être sans incidence sur l'écoulement de l'air.

La présente invention vise à diriger l'écoulement le plus rectilignement possible, pour favoriser le débit avant soupape par rapport à l'arrière soupape, sans dégrader la perméabilité du conduit.

Dans ce but, elle propose que le conduit brut de fonderie présente, sur une partie de sa longueur, une face inférieure sensiblement plane, raccordée au logement par une zone de transition arrondie, dessinant un retrait, dans la masse de la culasse.

De préférence, le retrait est limité au pied de la face inférieure du conduit, et il est dégagé par usinage dans la masse de la culasse brute de fonderie.

La présente invention permet un bon raccord entre le conduit brut et l'ogive, et permet de conserver un plat prononcé jusqu'à l'ogive, ce qui est propice à la génération de « tumble ».

La fabrication de la culasse peut notamment comporter :
- une première étape de moulage, définissant au moins une forme brute de conduit d'admission avec une face inférieure plane, se raccordant à un logement annulaire de siège de soupape par une zone de raccordement arrondie, qui s'avance vers l'intérieur du conduit.
- une deuxième étape d'usinage du conduit à son extrémité inférieur.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1, est une coupe de culasse montrant un conduit brut connu,
- la figure 2, est une coupe de culasse montrant la forme brute du conduit de l'invention,
- la figure 3, montre la forme usinée du même conduit, et
- les figures 3A et 3B sont respectivement des coupes selon A et B, de la figure 3.

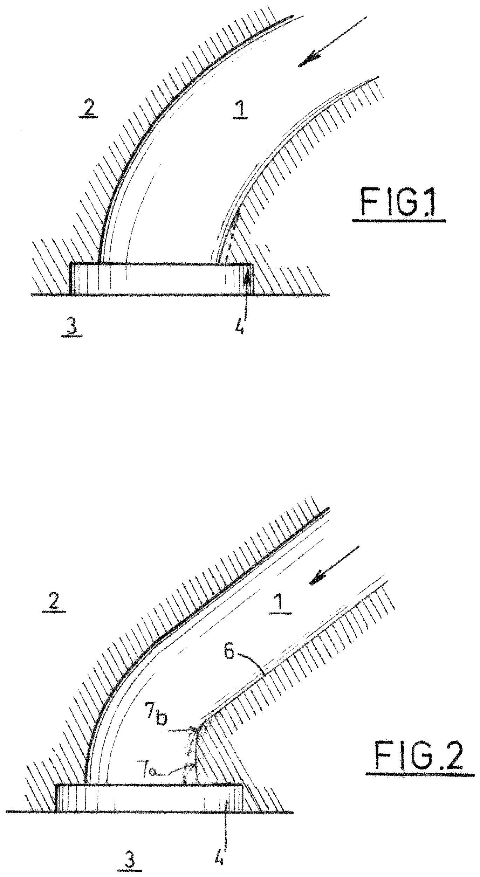

Sur la coupe de figure 1, on reconnaît un conduit d'admission coudé 1, qui débouche par son extrémité inférieure, dans une chambre de combustion 3 de la culasse 2. Un tel conduit est moulé en creux dans la culasse du moteur, et débouche dans la chambre 3 de celui-ci à son extrémité inférieure, par un logement annulaire 4 de siège de soupape. Le siège de soupape lui-même n'est pas représenté. La figure 1 montre une forme brute de conduit, c'est-à-dire telle que résultant du moulage de la culasse, avant l'opération habituelle d'usinage de sa zone de raccordement à la chambre de combustion 3.

La figure 2 montre aussi une forme brute de conduit. Ici, le conduit 1, dessine également un coude, avant de déboucher dans la chambre 3, mais il présente sur une partie de sa longueur un tronçon rectiligne. La face inférieure 6a du conduit est sensiblement plane, de même que sa face supérieure 6b. La face inférieure 6a est raccordée au logement de siège de soupape 4, par un arrondi 7b : cette zone de transition arrondie 7b, s'avance vers le centre du conduit, et dessine un retrait, qui fait suite à celui-ci en direction du siège de soupape.

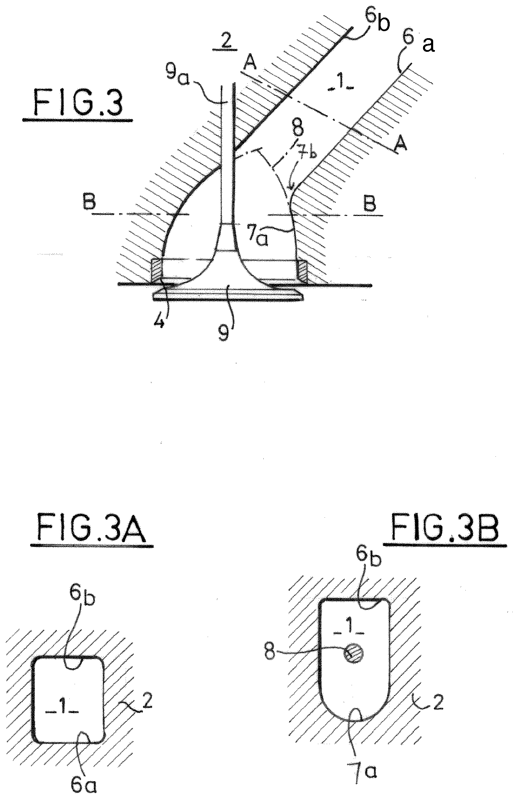

La figure 3 montre le même conduit 1, que la figure 2, après le calibrage de son extrémité inférieure par une ogive d'usinage 8, dont le profil est indiqué en traits interrompus. Le schéma fait aussi apparaître la soupape 9, avec sa tige de soupape 9a. Par rapport à la figure 2, l'usinage du conduit 1 a dégagé, un retrait 7a de forme arrondie, dans la masse de la culasse 2, au niveau de la « bosse » 7b. Le retrait 7a forme une transition entre la face inférieure 6a du conduit, et le logement de siège de soupape 4.

En se reportant aux coupes 3A et 3B, on voit que le retrait 7a est limité au pied de la face inférieure 6a du conduit. Les autres faces du conduit se poursuivent sans transition prononcée, jusqu'au plus près de l'extrémité inférieure du conduit. Le retrait 7a est dégagé par usinage, par l'ogive 8, dans la masse de la culasse 2, brute de fonderie. La figure 3B met en évidence sa symétrie par rapport au plan de symétrie du conduit 1, et de sa face inférieure 6a.

Conformément à l'invention, la culasse peut donc être fabriquée de la façon suivante. Au moulage de la culasse, est définie au moins une forme brute de conduit, avec une face inférieure plane 6a se raccordant à un logement annulaire de siège de soupape 4, par une zone de raccordement arrondie 7b, qui s'avance vers l'intérieur du conduit. Dans une deuxième étape, l'extrémité inférieure du conduit est calibrée. Le calibrage est une opération d'usinage, sur le retrait 7a, et la zone de transition arrondie 7b.

En conclusion, il faut souligner que l'invention vise avant tout à faire du « tumble » fixe ou variable. Dans ce but, elle propose de changer la forme des conduits bruts, tout en garantissant sa robustesse vis-à-vis des dispersions de production. La nouvelle forme proposée présente un creux 7a, sur la partie inférieure du conduit, dans la masse de la culasse.

Cette disposition permet notamment de poursuivre la « section carrée » (c'est à dire les parois planes du conduit), au plus près de la chambre de combustion, en particulier dans la zone en aval de la tige de soupape, de manière à diriger l'écoulement le plus rectilignement possible, et à favoriser le débit avant soupape par rapport à l'arrière soupape. La « section carrée » (mise en évidence sur la figure 3A), peut ainsi être conservée jusqu'à la reprise d'usinage.

L'arrondi 7b du brut, facilite la réalisation par usinage, d'une transition douce, en arrière de la soupape, entre la « section carrée » et la section finale, nécessairement ronde, du conduit. Pour obtenir ce résultat, il est souhaitable que l'ogive présente un profil adapté pour rendre la transition, la plus douce possible. Une tête ogivale, est appropriée, dans la mesure où elle permet d'assurer la continuité souhaitée, entre la pente de la génératrice supérieure du brut, et celle de la partie usinée.

L'angle de l'ogive doit être ajusté, non seulement par rapport à la pente de brut, mais aussi en fonction des déplacements du brut selon les dispersions de fonderie. Par exemple, si le brut « recule » vers l'arrière de la soupape, par rapport aux côtes souhaitées, l'angle de l'ogive doit permettre d'éviter une marche descendante.

Ainsi, il faut souligner que l'invention permet un gain en « tumble » et en perméabilité, tout en assurant une bonne robustesse vis-à-vis des dispersions de fabrication.

## Revendications

1. Conduit d'admission (1) moulé en creux dans une culasse (2) de moteur thermique qui débouche dans une chambre de combustion (3) de celui-ci à son extrémité inférieure par un logement annulaire (4) de siège de soupape, présentant sur une partie de sa longueur une face inférieure sensiblement plane (6a), **caractérisée en ce que** la face inférieure du conduit (6a) est raccordée au logement (4) par une zone de raccordement arrondie (7b) qui s'avance vers le centre du conduit, et par un retrait de forme arrondie (7a), usiné par ogive (8), qui fait suite à la zone de raccordement (7b), et forme une transition entre la face inférieure du conduit (6a) et le logement du siège de soupape (4).

2. Conduit d'admission selon la revendication 1, **caractérisé en ce que** le retrait (7a) est limité au pied de la face inférieure (6a) du conduit.

3. Conduit d'admission (1) selon la revendication 1 ou 2, **caractérisé en ce que** le retrait (7) est dégagé dans la masse de la culasse (2) brute de fonderie.

4. Conduit d'admission selon la revendication 2, **caractérisé en ce que** la forme brute de la culasse (2) présente en bas de la face inférieure (6a) du conduit une zone de transition arrondie (7b) s'avançant vers le centre du conduit.

5. Conduit d'admission selon la revendication 4 **caractérisé en ce que** le retrait (7a) dessiné au pied de la face inférieure (6a) de la culasse, est symétrique par rapport au plan de symétrie de celle-ci.

6. Conduit d'admission selon l'une des revendications précédentes, **caractérisé en ce que** les autres faces du conduit se poursuivent sans transition prononcée, jusqu'au plus près de l'extrémité inférieure du conduit.

7. Culasse de moteur thermique (2), **caractérisée en ce qu'**elle présente au moins un conduit d'admission (1) conforme à l'une des revendications précédentes.

8. Moteur thermique, **caractérisé en ce que** sa culasse (2) est conforme à la revendication 7.

9. Procédé de fabrication d'une culasse de moteur thermique **caractérisé, en ce qu'**il comporte au moins :
- une première étape de moulage de la culasse (2), définissant au moins une forme brute de conduit d'admission (1) avec une face inférieure plane (6a) se raccordant à un logement annulaire de siège de soupape (3) par une zone de raccordement arrondie (7b) s'avançant vers l'intérieur du conduit et un retrait arrondi (7a),
- une deuxième étape de calibrage du conduit à son extrémité inférieure consistant en une opération d'usinage par ogive (8) sur le retrait (7a) et la zone de transition arrondie (7b).

10. Procédé de fabrication selon la revendication 9, **caractérisé en ce que** le moulage de l'extrémité inférieure du conduit (1) dégage au pied de la face arrière (6a) de celui-ci, un retrait (7a) faisant suite à une zone de transition du brut (7b), s'avançant vers le centre du conduit.

## Patentansprüche

1. Ansaugkanal (1), der hohl in einem Zylinderkopf (2) eines Verbrennungsmotors geformt ist, der an seinem unteren Ende durch eine ringförmige Aufnahme (4) eines Ventilsitzes in einen Brennraum (3) von diesem mündet, der über einen Teil seiner Länge eine im Wesentlichen ebene Unterseite (6a) aufweist, **dadurch gekennzeichnet, dass** die Unterseite des Kanals (6a) an die Aufnahme (4) durch eine abgerundete Anschlusszone (7b), die sich der Mitte des Kanals nähert, und durch eine durch Spitzbogen (8) bearbeitete Schwindung (7a) abgerundeter Form anschließt, die auf die Anschlusszone (7b) folgt und einen Übergang zwischen der Unterseite des Kanals (6a) und der Aufnahme des Ventilsitzes (4) bildet.

2. Ansaugkanal nach Anspruch 1, **dadurch gekennzeichnet, dass** die Schwindung (7a) auf den Fuß der Unterseite (6a) des Kanals begrenzt ist.

3. Ansaugkanal (1) nach Anspruch 1 oder 2, **dadurch gekennzeichnet, dass** die Schwindung (7) aus der Masse des Rohguss-Zylinderkopfs (2) herausgearbeitet wird.

4. Ansaugkanal nach Anspruch 2, **dadurch gekennzeichnet, dass** die Rohform des Zylinderkopfs (2) unterhalb der Unterseite (6a) des Kanals eine abgerundete Übergangszone (7b) aufweist, die sich der Mitte des Kanals annähert.

5. Ansaugkanal nach Anspruch 4, **dadurch gekennzeichnet, dass** die am Fuß der Unterseite (6a) des Zylinderkopfs gestaltete Schwindung (7a) symmetrisch bezüglich dessen Symmetrieebene ist.

6. Ansaugkanal nach einem der vorhergehenden Ansprüche, **dadurch gekennzeichnet, dass** die anderen Seiten des Kanals sich ohne deutlichen Übergang bis ganz nahe an das untere Ende des Kanals fortsetzen.

7. Zylinderkopf eines Verbrennungsmotors (2), **dadurch gekennzeichnet, dass** er mindestens einen Ansaugkanal (1) nach einem der vorhergehenden Ansprüche aufweist.

8. Verbrennungsmotor, **dadurch gekennzeichnet, dass** sein Zylinderkopf (2) Anspruch 7 entspricht.

9. Herstellungsverfahren eines Zylinderkopfs eines Verbrennungsmotors, **dadurch gekennzeichnet, dass** es mindestens aufweist
- einen ersten Schritt des Formens des Zylinderkopfs (2), der mindestens eine Ansaugkanal-Rohform (1) mit einer ebenen Unterseite (6a) definiert, die an eine ringförmige Aufnahme (3) eines Ventilsitzes durch eine abgerundete Anschlusszone (7b), die sich dem Inneren des Kanals annähert, und eine abgerundete Schwindung (7a) anschließt,
- einen zweiten Schritt des Kalibrierens des Kanals an seinem unteren Ende, der aus einem Vorgang der Bearbeitung durch Spitzbogen (8) an der Schwindung (7a) und der abgerundeten Übergangszone (7b) besteht.

10. Herstellungsverfahren nach Anspruch 9, **dadurch gekennzeichnet, dass** das Formen des unteren Endes des Kanals (1) am Fuß von dessen Rückseite (6a) eine Schwindung (7a) herausarbeitet, die auf eine Übergangszone der Rohform (7b) folgt, die sich der Mitte des Kanals annähert.

## Claims

1. Intake duct (1) cast as a recess in a combustion engine cylinder head (2) and which opens into a combustion chamber (3) of this engine at its lower end via an annular valve seat housing (4), having over part of its length a substantially planar lower face (6a), **characterized in that** the lower face of the duct (6a) is connected to the housing (4) by a rounded connecting zone (7b) which continues toward the centre of the duct, and by a void (7a) of rounded shape, machined by an ogival cutter (8), which follows on from the connecting zone (7b), and which forms a transition between the lower face of the duct (6a) and the valve seat housing (4).

2. Intake duct according to Claim 1, **characterized in that** the void (7a) is confined to the foot of the lower face (6a) of the duct.

3. Intake duct (1) according to Claim 1 or Claim 2, **characterized in that** the void (7) is revealed within the mass of the cylinder head (2) casting.

4. Intake duct according to Claim 2, **characterized in that** the as-cast shape of the cylinder head (2) has, at the bottom of the lower face (6a) of the duct, a rounded transition zone (7b) continuing toward the centre of the duct.

5. Intake duct according to Claim 4, **characterized in that** the void (7a) delineated at the foot of the lower face (6a) of the cylinder head is symmetric with respect to the plane of symmetry of the latter.

6. Intake duct according to one of the preceding claims, **characterized in that** the other faces of the duct continue without pronounced transition right up to near the lower end of the duct.

7. Combustion engine cylinder head (2), **characterized in that** it has at least one intake duct (1) according to one of the preceding claims.

8. Combustion engine, **characterized in that** its cylinder head (2) is according to Claim 7.

9. Method of manufacturing a combustion engine cylinder head, **characterized in that** it comprises at least:
- a first step of casting the cylinder head (2), defining at least an as-cast intake duct (1) shape with a planar lower face (6a) connecting to an annular valve seat housing (3) by a rounded connecting zone (7b) that continues towards the inside of the duct and a rounded void (7a),
- a second step of sizing the duct at its lower end, consisting in an operation of using an ogival cutter (8) to machine the void (7a) and the rounded transition zone (7b).

10. Method of manufacture according to Claim 9, **characterized in that** the casting of the lower end of the duct (1) reveals, at the foot of the rear face (6a) thereof, a void (7a) that follows on from a transition zone of the casting (7b), continuing towards the centre of the duct.
